# EUROPEAN PATENT APPLICATION

(11) **EP 4 850 900 A1**
(43) Date of publication of application: **09.12.2026**
(21) Application number: 26180923.0
(22) Date of filing: 26.05.2026
(51) Int. Cl.: B32B 1/08, F16L 11/04, F16L 11/08, B32B 25/04, B32B 25/10, B32B 25/14

(54) **SUSTAINABLE HOSE**

(30) Priority: 03.06.2025 US 202519226677
(71) Applicant: ContiTech Deutschland GmbH, 30165 Hannover (DE)
(72) Inventor: Miller, Lance, Fairlawn, 44333 (US)
(74) Representative: Preusser, Andrea

(57) **Abstract**

A hose includes an inner tube, a reinforcement layer disposed outwardly from the inner tube, and a cover layer disposed outwardly from the reinforcement layer, where at least one layer of the hose, such as the cover layer and/or the inner tube, includes a cured compound formed from a composition including one or more base elastomer(s) and one or more sustainable polyvinylchloride (PVC) polymer(s). The one or more sustainable PVC polymer(s) are derived from sustainable ethylene monomer derived from one or more renewable sources. The composition may further include one or more of recovered carbon black and/or sustainable oil(s) from sustainable sources. The hose embodiments may also include the reinforcement layer formed of fibers from sustainable material. The hose may contain the sustainable content in an amount of up to 75% by weight based upon total hose weight, or even greater than 25% by weight based upon total hose weight.

## Description

### TECHNICAL FIELD

The field to which the disclosure generally relates to elastomeric articles, in particular hoses and particularly to high performance, flexible reinforced hoses which are useful in a wide variety of applications. More specifically, the present invention relates to reinforced hoses where one or more layers of the hoses are formed from sustainable materials and/or reinforcements.

### BACKGROUND

Rubber hoses are used in a variety of applications for transporting fluids such as liquids and gases. For example, such hoses are commonly used as garden hoses, refrigeration hoses, fuel dispensing hoses, torque converter hoses, automotive heater hoses, coolant hoses, power transmission hoses, power steering hoses, or the like. Such hoses should be flexible enough to meet dimensional configurations required for such applications, and also should be sufficiently resistant to internal forces which may tend to deform the hose due to high pressure of the liquid or gas flowing through the hose. To ensure that the hose meets these demands, manufacturers of hoses for use in high, medium or low-pressure environments typically include a reinforcement layer between an inner tubular layer and an outer tubular layer.

Commonly at least one layer of the hose is formed from a petroleum-based material. For example, a commonly used petroleum-based material for forming one or more elastomeric layers is an alloy of nitrile butadiene rubber (NBR) and polyvinyl chloride (PVC). The PVC in this alloy is conventionally prepared by using ethylene derived from petroleum, which is reacted with chlorine to form ethylene dichloride, which is thermally cracked to yield vinyl chloride monomer, which is then polymerized to form the PVC.

### SUMMARY

There is an ongoing goal to use renewable materials for forming rubber and/or reinforcement materials, for example, using PVC sustainable polymer(s) derived from ethylene derived from sustainable source(s) and not from petroleum. Such need is met, at least in part, with embodiments according to this disclosure.

According to an aspect, a hose, includes: an inner tube, a reinforcement layer disposed outwardly from the inner tube, and a cover layer disposed outwardly from the reinforcement layer, wherein at least one layer of the hose includes a cured elastomeric compound formed from a composition comprising: one or more base elastomer(s), and one or more sustainable polyvinylchloride (PVC) polymer(s); wherein the one or more sustainable PVC polymer(s) are derived from sustainable ethylene monomer derived from one or more renewable sources.

The following description and the annexed drawings set forth certain illustrative embodiments according to the present disclosure. These embodiments are indicative, however, of but a few of the various ways in which the principles of the invention may be employed. Other objects, advantages and novel features according to aspects of the present disclosure will become apparent from the following detailed description when considered in conjunction with the drawings.

### BRIEF DESCRIPTION OF THE DRAWINGS

Certain embodiments of the disclosure will hereafter be described with reference to the accompanying drawings, wherein like reference numerals denote like elements. It should be understood, however, that the accompanying figures illustrate the various implementations described herein and are not meant to limit the scope of various technologies described herein, and:
FIG. 1 illustrates in perspective view, a hose according to some aspects of the disclosure; and,
FIG. 2 depicts in perspective view, another hose according to some aspects of the disclosure;
FIG. 3 illustrates in perspective view, yet another hose according to some aspects of the disclosure;
FIG. 4 depicts in perspective view, another hose according to some aspects of the disclosure;
FIG. 5 illustrates in perspective view, yet another hose according to some aspects of the disclosure; and,
FIG. 6 depicts in perspective view, another hose according to some aspects of the disclosure.

### DETAILED DESCRIPTION

The principles and aspects of the present disclosure have particular application to elastomeric materials containing sustainable polymer(s), and also to articles at least partially formed from such elastomeric material, such as hoses, power transmission belts, conveyor belts, air spring bellows, dampers, seals, gaskets, or the like, and thus will be described herein chiefly in this context. It is understood, however, that the principles and aspects of the present disclosure may be applicable to other types of articles for other applications when desirable to provide one or more advantages of the material(s) and/or construction(s) described herein.

An aspect of the present disclosure improves the sustainability of elastomeric articles by using sustainable polymer(s) derived from at least one sustainable source, in particular, using at least one sustainable PVC combined with at least one base elastomer in a cured composition that forms the elastomeric article. The exemplary elastomeric composition having the base elastomer(s) and sustainable PVC(s) may also be referred to herein as an elastomer-sustainable PVC composition.

The one or more elastomer(s) of the composition form at least part of the matrix and serve as the base of the elastomeric composition. The sustainable PVC(s) are blended with the base elastomer(s). The composition also may contain other polymer(s), such as non-elastomer polymer(s), that are blended with the base elastomer(s) to also form part of the matrix of the composition. The additives in the composition are compounded relative to the total base polymer content of the composition, and as such may be represented in parts per hundred (phr), which means parts by weight per 100 parts by weight of the base polymer(s). These additives are added in their effective amounts to achieve their desired function in the cured composition.

The base elastomer(s) of the composition may be of any suitable type. In exemplary embodiments, the base elastomer(s) are polar elastomers, such as acrylonitrile butadiene rubber (NBR), hydrogenated NBR (HNBR), carboxylated NBR (XNBR), epichlorohydrin rubber (ECO), fluoro-rubbers (FKM), or the like, or any blends thereof.

The sustainable PVC(s) incorporated with the base elastomer(s) may be derived from any suitable sustainable source. The term "sustainable" as used herein is in accordance with its ordinary and customary meaning. As such, a "sustainable material" is one in which that material or raw material(s) that make that material are from sustainable source(s). A sustainable source is a renewable source and/or a recycled source. A renewable source is one that can be replenished through sustainable practices, including, for example, natural or biomass materials, such as plant-based materials. A recycled source uses old material to reduce the demand of new raw materials. In general, sustainable materials reduce the negative impact on the environment, and thus generally are not derived from mining sources or petrochemical sources, including oil or natural gas, or the like.

Some non-limiting examples of renewable sources are one or more plant materials selected from the group consisting of sugar cane and sugar beet, maple, date palm, sugar palm, sorghum, American agave, corn, wheat, barley, sorghum, rice, potato, cassava, sweet potato, algae, fruit, materials comprising cellulose, wine, materials comprising hemicelluloses, materials comprising lignin, wood, straw, sugarcane bagasse, sugarcane leaves, corn stover, wood residues, paper, and combinations thereof.

In exemplary embodiments, the sustainable PVC(s) are derived from sustainable ethylene derived from biomass. This sustainable ethylene may be reacted with chlorine to form ethylene dichloride, which is thermally cracked to yield sustainable vinyl chloride monomer, which is then polymerized to form the sustainable PVC. An example of a sustainable PVC is Biovyn^{™} from the INEOS Group Ltd.

The sustainable PVC(s) may be incorporated with the one or more elastomer(s) in any suitable amount and in any suitable manner. In exemplary embodiments, the sustainable PVC(s) are incorporated in a total amount from about 5 phr to about 50 phr, more particularly from about 15 phr to about 50 phr, more particularly from about 30 phr to 50 phr (including all values and ranges between the stated values). In some embodiments, the base elastomer(s) also may be derived from sustainable source(s) (e.g., monomer such as ethylene from biomass).

The sustainable PVC(s) may be incorporated into the base elastomer(s) via suitable techniques. For example, the sustainable PVC(s) may be fluxed (melted) into the elastomeric composition. In such fluxing technique, the mixing takes place above the melting point of the sustainable PVC(s) to mix the PVC(s) into the mixture in its melted state. This improves the dispersion and properties provided by the sustainable PVC(s).

In certain embodiments, the sustainable PVC has higher melt viscosity and molecular weight than conventional petroleum-based PVC. For example, the K-value as determine in ISO 1628/2 may be from 70-72. This may provide the resulting composition when incorporated (e.g., fluxed) into the elastomer improved physical properties, improved barrier properties like permeation resistance, improved chemical resistance and similar resistance against ozone attack. For example, the physical properties of the elastomer-sustainable PVC composition may have a higher ultimate tensile strength (e.g., about 16.8 MPa versus standard petroleum PVC at 13.93 MPa) according to DIN 53504; higher modulus @100% strain (e.g., about 4.5 MPa versus standard PVC control at 3.9 MPa) according to DIN 53504; higher tear strength tested according to ASTM D624 (e.g., sustainable PVC with values of 196 N/mm versus standard control PVC samples with tear strength of 175 N/mm); and improved abrasion resistance with value of about 91 mm³ versus standard PVC control at 104 mm³).

The exemplary elastomer-sustainable PVC composition may include from about 50 to about 700 phr of fillers, such as carbon black, calcium carbonate, talc, clay, silica, or mixtures thereof. For example, the elastomer-sustainable PVC composition may include carbon black from about 10 phr to about 400 phr, and/or calcium carbonate from about 10 phr to about 350 phr. Alternatively or additionally, In some embodiments, talc may be incorporated in an amount of from about 10 phr to about 60 phr. Other conventional additives in the elastomer-sustainable PVC composition may include process and extender oils, antioxidants, waxes, pigments, plasticizers, softeners and the like. For example, the elastomer-sustainable PVC composition may include from about 10 phr to about 200 phr of a plasticizer, such as phthalates, trimellitates, glycols and other polar liquids. In some embodiments, the elastomer-sustainable PVC composition also contains from about 0.5 to about 1.5 phr of an antidegradant (e.g., antiozonant and/or antioxidant). Examples of such antidegradants include phenolics, diphenylamines, paraffin and microcrystalline waxes, and phenyl phosphites, are commonly used in elastomer-PVC compounds. The elastomer-sustainable PVC may also contain flame retardants such as chlorinated paraffins, hydrated alumina, zinc borate hydrate, antimony oxide, and/or magnesium oxide. In some embodiments, the composition will also include calcium-zinc acid stabilizers to protect the elastomer for degradation from the higher temperatures and acids generated during PVC fluxing/melting.

In some aspects, one or more recovered carbon black(s) (rCB) and/or one or more sustainable oil(s) from renewable sources (as part of the sustainable content) are admixed with the elastomeric composition. The recovered carbon black may be derived from any suitable source(s), such as, but not limited to, scrap tire, roofing membrane process start up scrap, conveyor belt scrap, and/or hose scrap. Sustainable oils may be derived from any suitable source(s), such as, but not limited to, automotive motor oil recycling, tire pyrolysis oils, bio-derived oils such as corn oil, coconut oil, rapeseed oil, soybean oil, vegetable oil, etc., and the like.

The exemplary elastomer-sustainable PVC composition is cured (crosslinked) using a cure-effective amount of a suitable curative. Generally, crosslinking of the exemplary elastomer-sustainable PVC composition may take place via vulcanization with sulfur, but may also accomplished with suitable peroxide(s), as understood by those having skill in the art.

Certain embodiments of the disclosure will hereafter be described with reference to the accompanying drawings, in which like reference numerals denote like elements. It should be understood, however, that the accompanying figures illustrate the various implementations described herein and are not meant to limit the scope of various technologies described herein. In addition, it is understood that various aspects and features of these embodiments may be substituted for one another or used in conjunction with one another where applicable. Furthermore, it is understood that the description of material(s) forming the various parts of one embodiment article may be the same material(s) for the same or similar part in another embodiment article, except as otherwise noted below.

Generally, a multilayer reinforced hose includes at least an inner tube layer, a reinforcing layer, and an outer cover layer, as shown in the various embodiments. Also as demonstrated in the various embodiments, suitable hoses may include additional layers. Any layer of the hose may be formed from the exemplary cured elastomer-sustainable PVC composition having the base elastomer(s) and sustainable PVC(s) according to the present disclosure. This may include the inner tube, barrier layer(s), friction layer(s), tie layer(s), outer tube, or the like. These layer(s) may have the same composition or may be different. The different compositions may be elastomer-sustainable PVC compositions with different amounts of the ingredients. In exemplary embodiments, the sustainable PVC(s) improve environmental properties, such as antidegradant properties (e.g., resistance to ozone attack), and may be particularly suitable for use in the outer cover layer 106.

In hose embodiments according to the disclosure, the sustainable content weight amount, including the exemplary elastomer-sustainable PVC composition, and other optional materials from sustainable sources, when used, may be up to about 95% by weight based upon total hose weight, up to about 75% by weight based upon total hose weight, up to about 65% by weight based upon total hose weight, greater than 50% by weight based upon total hose weight, greater than 40% by weight based upon total hose weight, greater than 25% by weight based upon total hose weight, or even greater than 5% by weight based upon total hose weight.

In some embodiments, one or more layers of the hose are not formed with the exemplary elastomer-sustainable PVC composition and are instead formed with conventional compositions.

For example, when not formed with the exemplary elastomer-sustainable PVC composition, the inner tube may be formed from a composition including acrylonitrile butadiene rubber (NBR), hydrogenated NBR, carboxylated NBR, polychloroprene, fluoroelastomer, epichlorohydrin, nitrile, carboxylated nitrile rubber, CPE, CSM, styrene-butadiene rubber (SBR), NBR/PVC blends, or any blends thereof. Any suitable amount of these materials may be used. Additional fillers and additives may be included in the formulation of the composition depending upon the requirements of the particular application envisioned. Such fillers and additives, which may be functional or inert, may include curing agents or systems, wetting agents or surfactants, plasticizers, processing oils, pigments, dispersants, dyes, and other colorants, opacifying agents, foaming or anti-foaming agents, antistatic agents, coupling agents such as titanates, amines and silanes, chain extending oils, tackifiers, flow modifiers, pigments, lubricants, and other agents, stabilizers, emulsifiers, antioxidants, thickeners, free sulfur, peroxide(s), and/or flame retardants. The formulation of the material may be compounded in a conventional mixing apparatus as an admixture of the rubber and filler components, and any additional fillers or additives. The thickness of the inner tube in some embodiments according to the disclosure, may be from about 0.031 inches (0.8 mm) to about 0.157 inches (4 mm), and in some instances, from about 0.039 inches (1.0 mm) to about 0.138 inches (3.5 mm).

The cover layer, when not formed with the exemplary elastomer-sustainable PVC composition, can be formed with acrylonitrile butadiene rubber (NBR), hydrogenated NBR, carboxylated NBR, polychloroprene, fluoroelastomer, epichlorohydrin, nitrile, carboxylated nitrile rubber, EPDM, EPR, CPE, CSM, styrene-butadiene rubber (SBR), NBR/PVC blends, or any blends thereof. Any of the materials forming the cover layer may be further loaded with metal particles, carbon black, or another electrically-conductive particulate, flake, or fiber filler so as to render the hose electrically-conductive for static dissipation or other applications. The compositions forming the cover layer also include such additives as retardants to prevent an unduly quick cure, antioxidants, adhesion promoters, processing aids, reinforcing agents and fillers, such as carbon black, silica, other mineral fillers, lignin, and the like. The cover layer may have a thickness of from about 0.039 inches (1 mm) to about 0.12 inches (3 mm), from about 0.059 inches (1.5 mm) to about 0.098 inches (2.5 mm), and in some instances, about 0.067 inches (1.7 mm) to about 0.075 inches (1.9 mm).

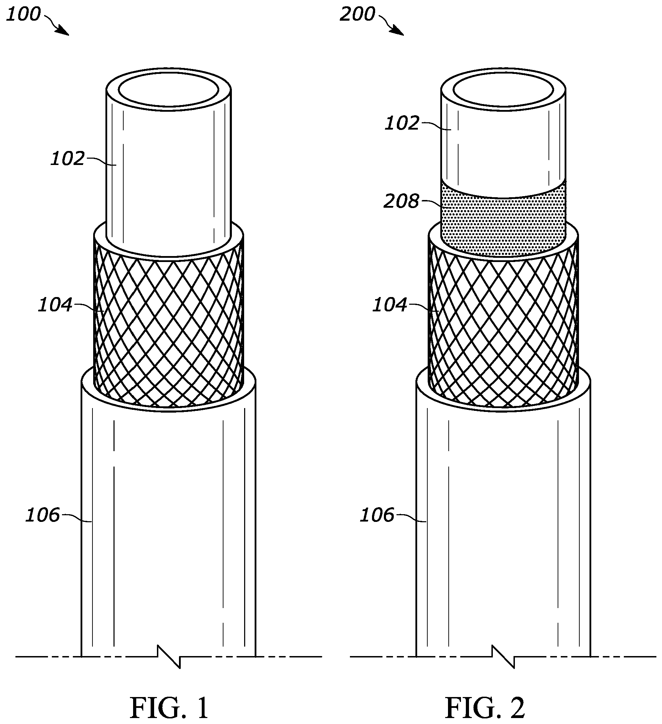

FIG. 1 shows a multilayer reinforced hose 100 in which at least one layer is formed from the exemplary elastomer-sustainable PVC composition according to the disclosure. As shown, the hose 100 includes at least an inner tube 102, reinforcing layer 104, and outer cover layer 106. In exemplary embodiments, the outer cover layer 106 is formed with the exemplary elastomer-sustainable PVC composition.

The reinforcing layer 104 of the hose 100 is not particularly limited, and may include one or more layers of reinforcement filaments constructed in any suitable manner. For example, the reinforcing layers may be constructed with yarn produced from a vinylon fiber, rayon fiber, hemp fiber, polyester fiber, polyvinyl acetate fiber, nylon fiber, aramid fiber, natural fiber, etc.; or a metal wire or metal alloy wire etc. braided, wrapped in a spiral, or wrapped in a plurality of spiraled layers wound in counter directions. In some other aspects, the reinforcement filaments layer may be formed from sustainable materials as part of the sustainable content, as well. For example, recycled PET may be used as a suitable reinforcement filament used in the reinforcing layer.

Each of the reinforcing layers may be formed by spiral winding one or more layers of a yarn or hard steel wire. Reinforcing layers may also be formed from braid or knit reinforcements. In those cases where two layers of a yarn, metal wire, or metal alloy wire are used, a first layer may be spiral wound in a first winding direction, and a second layer spiral wound in a second winding direction opposite the first winding direction. In some cases, the first layer is laid at a positive angle relative to the longitudinal axis of the hose, and the second layer laid at a negative angle relative to the longitudinal axis. The angle of one of layers may be between about 45° and 65°, and the angle of the other layers between about -45° and -65°.

FIG. 2 shows another multilayer reinforced hose 200 in which at least one layer is formed from the exemplary elastomer-sustainable PVC composition according to the disclosure. The hose 200 includes inner tube 102, reinforcing layer 104, outer cover 106, similar to hose 100 described above, and further includes layer 208, which may be a ply reinforcement layer, or a bonding layer, or backing layer, or barrier layer, and layer 208 is disposed between inner tube 102 and reinforcing layer 104. When used as a ply reinforcement layer, it is not particularly limited, but may be produced from a vinylon fiber, rayon fiber, polyester fiber, nylon fiber, fiber from sustainable material, or aramid fiber, etc. in a ply configuration. When used as a barrier layer, it is not particularly limited, but may be produced from nylon, PVDF, polyketone, THV, ETFE and the like.

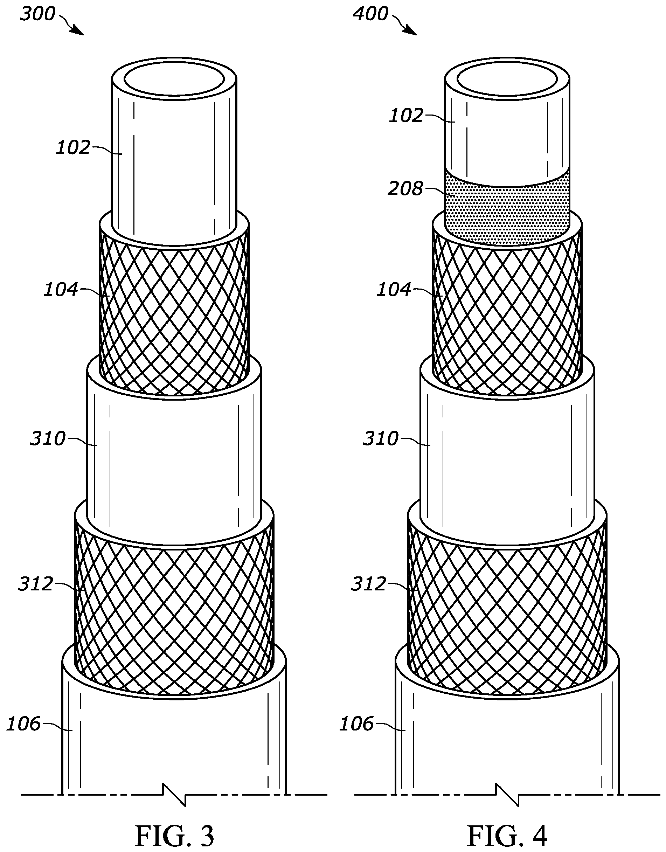

FIG. 3 shows another multilayer reinforced hose 300 in which at least one layer is formed from the exemplary elastomer-sustainable PVC composition according to the disclosure. The hose 300 includes inner tube 102, reinforcing layer 104, friction layer 310, second reinforcing layer 312, and outer cover 106. The reinforcing layer 104, friction layer 310, and second reinforcing layer 312 collectively may be referred to as a reinforcing layer of the hose. The second reinforcing layer 312, is not particularly limited, but may be produced from a vinylon fiber, rayon fiber, polyester fiber, nylon fiber, aromatic polyamide fiber, fiber from sustainable material, etc. or a hard steel wire etc. braided, wrapped in a spiral, or wrapped in a plurality of spiraled layers wound in counter directions.

FIG. 4 shows another multilayer reinforced hose 400 in which at least one layer is formed from the exemplary elastomer-sustainable PVC composition according to the disclosure. Hose 400 includes inner tube 102, reinforcing layer 104, friction layer 310, second reinforcing layer 312, and outer cover 106. The hose further includes a layer 208 disposed between inner tube 102 and reinforcing layer 104.

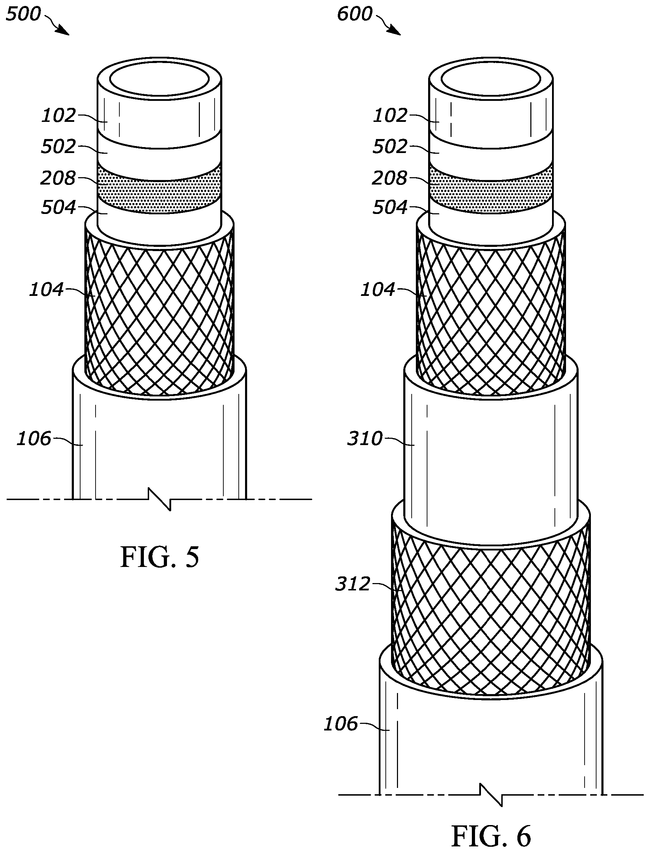

FIG. 5 shows another multilayer reinforced hose 500 in which at least one layer is formed from the exemplary elastomer-sustainable PVC composition according to the disclosure. Hose 500 includes inner tube 102, reinforcing layer 104, outer cover 106, layer 208, which may be a ply reinforcement layer, or a bonding layer, or backing layer, or barrier layer, similar to hose 200 described above. Disposed between inner tube 102 and layer 208 is a friction layer 502. Also, disposed between layer 208 and reinforcing layer 104 is friction layer 504.

FIG. 6 shows another multilayer reinforced hose 600 in which at least one layer is formed from the exemplary elastomer-sustainable PVC composition according to the disclosure. Hose 600 is similar to hose 500, and further includes friction layer 310 and second reinforcing layer 312 disposed between reinforcing layer 104 and outer cover 106, as shown. Again, according to some aspects of the disclosure, layers 502, 504, or 310, or any combination thereof, may include the exemplary elastomer-sustainable PVC composition.

With regards to the reinforcing layers 104, 312; friction layers 310, 502, 504; tie layers; ply reinforcement layers; or the like, as depicted herein, such may be formed from any suitable materials know to those of skill in the art. In some aspects, such layers may be formed from those materials disclosed in United States Pat. No. 6,179,008 B1, which is incorporated herein by reference thereto.

For example, friction layers, tie layers, or the like, when used, and when not formed with the exemplary elastomer-sustainable PVC composition, may be formed from any suitable curable rubber based composition, including acrylonitrile butadiene rubber (NBR), hydrogenated NBR, carboxylated NBR, polychloroprene, fluoroelastomer, epichlorohydrin, nitrile, carboxylated nitrile rubber, EPDM, EPR, CPE, CSM, styrene-butadiene rubber (SBR), NBR/PVC blends, or any blends thereof. The curable rubber employed in the friction layer of some hoses in accordance with the disclosure, may also contain various additives in conventional or suitable amounts known to persons having ordinary skill in the art. Such additives may include, and are not limited to, retardants to prevent an unduly quick cure, antioxidants, adhesion promoters, processing aids, reinforcing agents, talc and fillers, such as carbon black, silica, other mineral fillers, lignin, and the like. Reinforcing fillers are typically utilized at a level which is within the range of about 20 parts per hundred parts (phr) to about 400 phr. The friction layer used in embodiments according to the disclosure is typically from about 0.020 inches (0.5 mm) to about 0.051 inches (1.3 mm) thick, is more typically from about 0.024 inches (0.6 mm) to about 0.043 inches (1.1 mm) thick, and in some aspects, will be from about 0.028 inches (0.7 mm) to about 0.035 inches (0.9 mm) in thickness.

Elastomeric compositions were prepared and tested for the purpose of further illustrating the nature of some of the embodiments and aspects of the present disclosure and are not intended as a limitation on the scope thereof. The test formulations are shown in Table 1 and the test data for these evaluations are shown in Table 2, in which examples according to the disclosure are shown as Ex. and comparative examples are shown as Comp.

**Table 1**

| **Ingredient** | **Ex. 1** | **Ex. 2** | **Comp.** |
|---|---|---|---|
| Standard Petroleum PVC | | | 50 |
| Sustainable PVC | 50 | 50 | |
| XNBR | 53 | 53 | 53 |
| 34% ACN NBR | 47 | 47 | 47 |
| Precipitated Silica | 40 | 40 | 40 |
| Calcium Stearate | 1.5 | 1.5 | 1.5 |
| TiO2 | 7 | 7 | 7 |
| Hydrated Alumina (ATH) Flame retardant | 25 | 25 | 25 |
| Calcium-Zinc Stabilizer | 1 | 1 | 1 |
| Triethylene glycol di 2-ethylhexanoate | 10 | 10 | 10 |
| DINP | 20 | 20 | 20 |
| Bis(3-triethoxysilylpropyl) tetrasulfide | 1 | 1 | 1 |
| TOTM | 10 | 10 | 10 |
| Antimony oxide | 4 | 4 | 4 |
| Polymeric Phenol | 2 | 2 | 2 |
| Stearic acid | 1 | 1 | 1 |
| ZnO | 5 | 5 | 5 |
| Sulfur | 2 | 2 | 2 |
| MBTS | 2 | 2 | 2 |
| TMTM | 0.35 | 0.35 | 0.35 |
| Zinc Borate Hydrate | 4 | 4 | 4 |
| Total PHR | 285.85 | 291.05 | 291.05 |

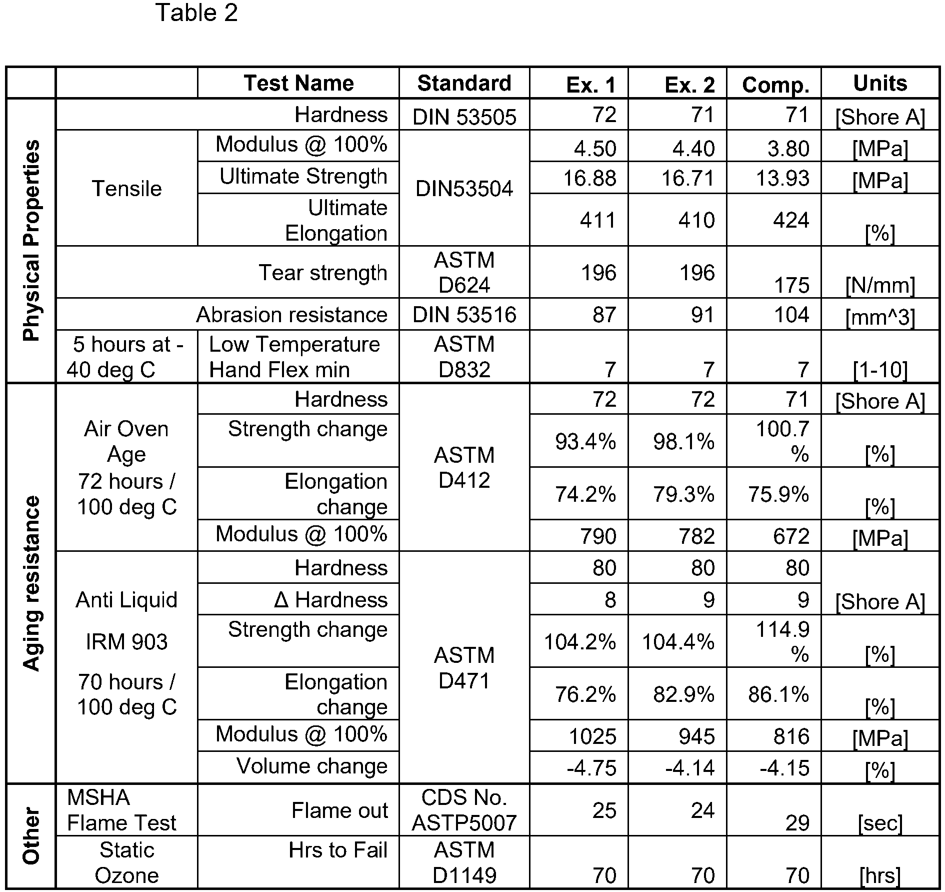

According to this testing, it has been found that using sustainable PVC is not only equivalent, but yields superior properties as compared to conventional petroleum-derived PVC. In some embodiments, sufficiently high viscosity (K-value 70-72), enables the resulting composite to have the suitable environmental resistance and the higher viscosity promotes higher green strength and cure tensile strength. The sustainable composite also process faster, cleaner and easier than traditional PVC. For example, the mixing process showed that the sustainable and higher melt viscosity PVC was able to mix better than current materials. The compound released from the mixer much easier than standard PVC. Other processing characteristics were unaffected. The tear strength, abrasion resistance, compression set, tensile strength were all improved. There was no change in flame resistance, fluid resistance, or heat resistance.

In addition to the hose applications described above, exemplary elastomer-sustainable PVC composition according to the disclosure may be useful for other applications, such as roofing membranes, seals, roll covers, vibration control, electrical insulation, belts, gaskets, automotive heating and cooling lines, air conditioning hose, turbocharger, engine and drivetrain systems and likely anywhere else the exemplary material can be used. In hose applications, the hoses may be water or air hoses for industrial or automotive applications, such as garden hose, air hoses, steam hose, automotive washer tubing, food / beverage hose, fuel dispensing hose; or the like. In belt applications, the belt may be a power transmission belt or a conveyor belt in which the exemplary elastomer-sustainable PVC composition is used in the pulley/drive-side cover layer, outer side cover layer, and/or carcass layer with reinforcement embedded therein.

The foregoing description of the embodiments has been provided for purposes of illustration and description. Example embodiments are provided so that this disclosure will be sufficiently thorough, and will convey the scope to those who are skilled in the art. Numerous specific details are set forth such as examples of specific components, devices, and methods, to provide a thorough understanding of embodiments of the disclosure, but are not intended to be exhaustive or to limit the disclosure. It will be appreciated that it is within the scope of the disclosure that individual elements or features of a particular embodiment are generally not limited to that particular embodiment, but, where applicable, are interchangeable and can be used in a selected embodiment, even if not specifically shown or described. Thus, while a particular feature may have been described with respect to only one or more of several embodiments, such feature may be combined with one or more other features of the other embodiments, separately or in any combination. The same may also be varied in many ways. Such variations are not to be regarded as a departure from the disclosure, and all such modifications are intended to be included within the scope of the disclosure. as may be desired and advantageous for any given or particular application.

Any background information contained in this disclosure is to facilitate a better understanding of the various aspects described herein. It should be understood that any such background statements are to be read in this light, and not as admissions of prior art. Likewise, the description and examples are presented herein solely for the purpose of illustrating the various embodiments of the disclosure and should not be construed as a limitation to the scope and applicability of the disclosure.

The phrase "and/or" as used in this disclosure should be understood to mean "either or both" of the elements so conjoined, i.e., elements that are conjunctively present in some cases and disjunctively present in other cases. Other elements may optionally be present other than the elements specifically identified by the "and/or" clause, whether related or unrelated to those elements specifically identified unless clearly indicated to the contrary. Thus, as a non-limiting example, a reference to "A and/or B," when used in conjunction with open-ended language such as "comprising" can refer, in one embodiment, to A without B (optionally including elements other than B); in another embodiment, to B without A (optionally including elements other than A); in yet another embodiment, to both A and B (optionally including other elements); etc.

The word "or" as used in this disclosure should be understood as being inclusive and not exclusive. For example, when separating items in a list, "or" or "and/or" shall be interpreted as being inclusive, i.e., the inclusion of at least one, but also including more than one, of a number or list of elements, and, optionally, additional unlisted items. For example, a condition A or B is satisfied by anyone of the following: A is true (or present) and B is false (or not present), A is false (or not present) and B is true (or present), and both A and B are true (or present). Only terms clearly indicating exclusivity should be interpreted as indicating exclusive alternatives (i.e. "one or the other but not both"), such as "either," "only one of," or "exactly one of." In other words, such terms of exclusivity refer to the inclusion of exactly one element of a number or list of elements.

Any references to "one embodiment" or "an embodiment" as used herein is understood to mean that a particular element, feature, structure, or characteristic described in connection with the embodiment is included in at least one embodiment. The appearances of the phrase "in one embodiment" in various places in the specification are not necessarily referring to the same embodiment.

In addition, use of the "a" or "an" are employed to describe elements and components of the embodiments herein. This is done merely for convenience and to give a general sense of concepts according to the disclosure. This description should be read to include one or at least one and the singular also includes the plural unless otherwise stated.

The word "exemplary" is used herein to mean "serving as an example or illustration." Any aspect or design described herein as "exemplary" is not necessarily to be construed as preferred or advantageous over other aspects or designs. Likewise, the phrases "particularly," "preferably," or the like as used in this disclosure may refer to an element or value that provides advantage(s) in some embodiment(s), however is not intended to limit the scope of the disclosure to those "particular" or "preferable" features.

Transitional language such as "including," "comprising," "having," "containing," "involving," or variations thereof, is intended to be broad and encompass the subject matter listed thereafter, equivalents, and additional subject matter not recited, i.e., to be open-ended and meaning including but not limited to.

It is to be understood that terms such as "top," "bottom," "upper," "lower," "left," "right," "front," "rear," "forward," "rearward," or the like may refer to an arbitrary frame of reference, rather than to the ordinary gravitational frame of reference.

It is to be understood that all values, ranges, ratios or the like as described in this disclosure may be combined in any manner. In addition, it is to be understood that a concentration or amount or value range listed in this disclosure is intended to include any and every concentration or amount or value within the range, including the end points, as if each value within the range has been expressly stated. For example, "a range of from 1 to 10" is to be read as indicating each and every possible number along the continuum between about 1 and about 10. Thus, even if specific data points within the range, or even no data points within the range, are explicitly identified or refer to only a few specific data points, it is to be understood that the inventor(s) appreciate and understand that any and all data points within the range are to be considered to have been specified, and that inventor(s) had possession of the entire range and all points within the range.

In addition, each numerical value used in this disclosure should be read once as modified by the term "about" (unless already expressly so modified), and then read again as not so modified unless otherwise indicated in context. The term "about" as used herein refers to any value which lies within the range defined by a variation of up to ±10% of the stated value, for example, ±10%, ± 9%, ± 8%, ± 7%, ± 6%, ± 5%, ± 4%, ± 3%, ± 2%, ±1 %, ±0.01 %, or ±0.0% of the stated value, as well as values intervening such stated values. When the term "about" is used in describing a value or an end-point of a range, the disclosure should be understood to include the specific value or end-point referred to.

The term "consisting essentially of" in relation to a composition is to indicate that substantially (e.g., greater than 95 weight % or greater than 99 weight %) of the component(s) present in the composition is the component(s) recited. Therefore, this term does not exclude the presence of minor additives or impurities as would be understood by those having ordinary skill in the art.

Although the invention has been shown and described with respect to a certain embodiment or embodiments, it is apparent that equivalent alterations and modifications will occur to those having ordinary skill in the art upon the reading and understanding this disclosure, and such modifications are intended to be included within the scope of this disclosure as defined in the claims. In particular regard to the various functions performed by the above described elements (components, assemblies, devices, compositions, etc.), the terms (including a reference to a "means") used to describe such elements are intended to correspond, unless otherwise indicated, to any element which performs the specified function of the described element (i.e., that is functionally equivalent), even though not structurally equivalent to the disclosed structure which performs the function in the herein illustrated exemplary embodiment or embodiments of the disclosure.

## Claims

1. A hose comprising:
an inner tube, a reinforcement layer disposed outwardly from the inner tube, and a cover layer disposed outwardly from the reinforcement layer,
wherein at least one layer of the hose includes a cured elastomeric compound formed from a composition comprising:
one or more base elastomer(s), and
one or more sustainable polyvinylchloride (PVC) polymer(s);
wherein the one or more sustainable PVC polymer(s) are derived from sustainable ethylene monomer derived from one or more renewable sources.

2. The hose according to claim 1, wherein the sustainable ethylene monomer of the one or more sustainable PVC polymer(s) is derived from biomass as one of the one or more renewable sources.

3. The hose according to claim 1, or any other preceding claim, wherein the one or more sustainable PVC polymer(s) is incorporated in the composition in a total amount from 30 phr to 50 phr.

4. The hose according to claim 1, or any other preceding claim, wherein the one or more sustainable PVC polymer(s) is incorporated into the composition by fluxing into the base elastomer(s).

5. The hose according to claim 1, or any other preceding claim,
wherein the one or more sustainable PVC polymer(s) has a K value from 70 to 72.

6. The hose according to claim 1, or any other preceding claim,
wherein the at least layer of the hose including the cured elastomeric compound includes the outer cover layer.

7. The hose according to claim 1, or any other preceding claim, wherein the composition further comprises recovered carbon black.

8. The hose according to claim 1, or any other preceding claim, wherein the composition further comprises a plasticizer derived from at least one sustainable source.

9. The hose according to claim 1, or any other preceding claim, wherein the reinforcement layer comprises fiber derived from a sustainable source.

10. The hose according to claim 1, or any other preceding claim, wherein a total sustainable content of the hose is an amount from greater than 25% by weight up to 95% by weight based upon total hose weight.

11. An elastomeric article, comprising an elastomeric body formed with a composition comprising:
one or more base elastomer(s), and
one or more sustainable polyvinylchloride (PVC) polymer(s);
wherein the one or more sustainable PVC polymer(s) are derived from sustainable ethylene monomer derived from one or more renewable sources.

12. The elastomeric article according to claim 11, wherein the elastomeric article is a reinforced elastomeric article having reinforcement filaments; in particular the elastomeric article being a hose, a power transmission belt, a conveyor belt, an air spring bellows, a damper, a seal, or a gasket.
